# EUROPEAN PATENT APPLICATION

(11) **EP 4 180 955 A1**
(43) Date of publication of application: **17.05.2023**
(21) Application number: 22206809.0
(22) Date of filing: 10.11.2022
(51) Int. Cl.: G06F 9/48, G06N 20/00

(54) **AUTOMATED CODE ANALYSIS AND TAGGING (METHODS AND SYSTEMS)**

(30) Priority: 10.11.2021 US 202117523580
(71) Applicant: JPMorgan Chase Bank, N.A., New York, NY 10179 (US)
(72) Inventor: WAITE, Tom, New York, 10179 (US); NISTOREANU, Ioana, New York, 10179 (US); CLINTON, Thomas, New York, 10179 (US); RASSKAZOV, Oleg, New York, 10179 (US)
(74) Representative: Leonhard, Frank Reimund

(57) **Abstract**

Systems and methods for affinity-based distribution of work are disclosed. The method may include determining a classification for a plurality of tasks. The method may further include classifying a compute cost and an affinity for each task of the plurality of tasks. The method may further include assigning the plurality of tasks to a work collection. The method may further include selecting one or more tasks from the plurality of tasks in the work collection based on a selection strategy of a worker node. The method may further include performing a compute task associated with the one or more tasks. The method may further include generating a set of results based on performing the compute task.

## Description

### 1. Field of the Invention

Embodiments are generally related to systems and methods for distributed work pool scheduling.

### 2. Description of the Related Art

Managing to compute cost and distributed workload presents challenges as the growth of data sets continues to expand. Parallelizing the workload across additional machines can generate redundant computing and loss of efficiency.

### SUMMARY OF THE INVENTION

Systems and methods for affinity-based distribution of work scheduling are disclosed. They are computer assisted. According to one embodiment, a method may include determining a classification, by a producer node, for a plurality of tasks. The classification may include classifying, for each task of the plurality of tasks, a compute cost and an affinity to a different task of the plurality of tasks. The method may further include assigning the plurality of tasks to a work collection. The method may further include selecting, by a worker node, one or more tasks from the plurality of tasks in the work collection based on a selection strategy of the worker node. The selection strategy may be based on a target affinity and a target cost of the worker node. The method may include performing a compute task associated with the one or more tasks of the plurality of tasks; and generating, by the worker node, a set of results based on performing the compute task.

### BRIEF DESCRIPTION OF THE DRAWINGS

For a more complete understanding of the present invention, the objects and advantages thereof, reference is now made to the following descriptions taken in connection with the accompanying drawings in which:
FIG. 1 depicts an example of a system for affinity-based distributed workflow, according to certain embodiments of the present disclosure.
FIG. 2 depicts an example of a process for affinity-based distributed workflow, according to certain embodiments of the present disclosure.
FIG. 3 depicts an example of computing architecture for implementing an affinity-based distributed workflow, according to certain embodiments of the present disclosure.
FIG. 4 depicts an example of a computing system according to certain embodiments of the present disclosure.

### DETAILED DESCRIPTION OF PREFERRED EMBODIMENTS

Embodiments are directed to computer assisted systems and methods for affinity-based work distribution. Embodiments may include determining a classification, by a producer node, for a plurality of tasks. The classification may include classifying, for each task of the plurality of tasks, a compute cost and an affinity to a different task of the plurality of tasks. The method may further include assigning the plurality of tasks to a work collection. The method may further include selecting, by a worker node, one or more tasks from the plurality of tasks in the work collection based on a selection strategy of the worker node. The selection strategy may be based on a target affinity and a target cost of the worker node. The method may include performing a compute task associated with the one or more tasks of the plurality of tasks; and generating, by the worker node, a set of results based on performing the compute task.

Embodiments may efficiently distribute tasks to a set of distributed processes in a compute grid. Many of these tasks have differing running times/memory demands. All distributed compute tasks are not completely independent from each other but have some aspect of common calculations and/or data. Therefore, as disclosed herein, runtime optimizations can be realized by worker nodes choosing tasks for which they have already done any portion of the common calculations or used some of the common data.

Embodiments may include a system that is scalable and resilient to failure of worker nodes (singly or together). Embodiments may be further enriched with algorithms directing to scale the solution. In contrast with existing solutions of centralized task assignment, the disclosed systems and methods herein have worker nodes that pull work from the work pool. The producer node may assign a plurality of attributes to each item of work, such as a first attribute to indicate a running costs, a second attribute that may indicate an affinity to other work items, etc. Worker nodes may select a set of items based on a state of the worker node and the state of the items in a task queue.

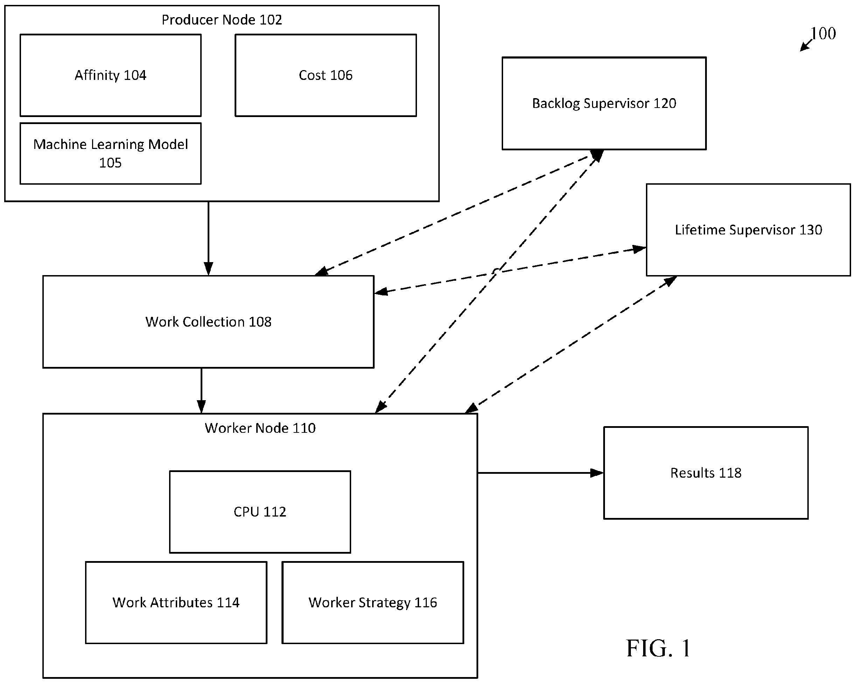

Referring now to the figures, FIG. 1 depicts a distributed workflow system 100 for affinity-based distributed workflow according to certain embodiments of the present disclosure. System 100 may include a producer node 102, work collection 108, worker node 110, backlog supervisor 120, lifetime supervisor 130, and results 118. As one of skill in the art will appreciate, while FIG. 1 depicts one of each producer node, supervisors, and worker node, any number of these modules can be implemented without departing from the teachings of the present disclosure.

Producer node 102 may be a computing system executing one or more software applications that generates a plurality of tasks for distribution (computer assisted). The producer node 102 may classify each task and determine an affinity 104 and a cost 106 for each task of the plurality of tasks. An example of an affinity 104 may be a similarity between a first task of the plurality of tasks and a second task of the plurality of tasks. The producer node 102 can determine the affinity based on a commonality between the first task and second task, or based on a machine learning model outputting a similarity score between the first and second task.

In a simplified example, the producer node 102 may classify the first task represents computing the sum of all numbers between 1 and 1000 while the second task represents computing the sum of all numbers between 1 and 1050. The producer node 102 may compute an affinity based on the overlap in compute steps between the first task and the second task. In this example, the affinity may be based on the commonality of computing the sum of numbers between 1 and 1000 between the first and second task. The producer node 102 may assign a first affinity of the first and second task.

In another example, the producer node may classify a first task as representing computing the sum of all numbers between 1 and 1000 while classifying a third task as representing computing the sum of all numbers between 1 and 300 and multiplying the product by 750. The producer node 102 may determine that the affinity between the first task and the third task is the commonality between the tasks (i.e., the sum between 1 and 300). As compared with the previous example, the producer node 102 may determine a lesser affinity between the first and third task as compared to the first and second task. The producer node 102 may determine the affinity as a similarity score, a vector, or other measure of commonality between the compared tasks.

The producer node 102 may determine a compute cost for each task. Continuing with the previous two examples, the producer node 102 may determine a compute cost for each of the first task, second task, and third task. The producer node 102 may further determine an adjusted compute cost based on the affinity. For instance, in the first example of the first task and second task, the producer node 102 may compute a lower compute cost because the affinity score may reduce the compute cost if the two tasks are performed by a common worker because of the high overlap in computation. In the second example of the first task and the third task, the producer node may compute both a compute cost of performing the tasks in parallel as well as a compute cost if the two tasks are performed by a common worker.

The producer node 102 may further include a machine learning model 105. In some embodiments, the machine learning model 105 may be used by the producer node 102 to determine an affinity set based on the affinity of a group of tasks or assign tasks to an affinity set. The machine learning model 105 may further be configured to determine a size of each affinity set. The machine learning model 105 may monitor work collection 108 and adjust the number and type of worker nodes 110. The machine learning model 105 may also determine a gulp size for one or more worker nodes 110. The machine learning model 105 may receive feedback from the backlog supervisor 120, lifetime supervisor 130, or the worker node 110 to further retrain machine learning model 105. The machine learning model 105 may also perform labeling for a set of constituent tasks for a gulp and the machine learning model 105 may employ a distance metric for determining the affinity. Work collection 108 may be a queue to store work items that are classified by the producer node 102. In one example, the work collection 108 may be a data structure store such as a database, cache, distributed ledger, sets, sorted lists, hashes, and the like. The work collection 108 may receive one or more tasks from the producer node 102 and store the task along with the associated affinity and compute cost of the task.

Worker node 110 may be a computing system executing one or more software applications. The worker node may host one or more components of the computing environment. In one example, multiple worker nodes 110 may exist based on a size of the work collection 108, a predefined number of worker nodes 110, or other factors. Each worker node 110 may include a CPU 112, work attributes 114, and a worker strategy 116. The CPU 112 may perform various compute tasks selected from the work collection 108. The worker node 110 may initialize with no preset affinity, but as the worker node selects work, the worker node 110 will establish affinity for certain types of work items. By developing this affinity, the worker node may become efficient at performing these certain types of work. The affinity of worker node 110 may be adaptive and provides a performance advantage and works in conjunction with dynamic increase and decrease of the worker processes beyond what conventional systems can achieve.

The work attributes may indicate one or more attributes of work being performed by the worker node 110 such as affinity, compute cost, and other metrics. The worker strategy 116 may be a set of parameters unique to each worker node that is used to determine which tasks from the work collection 108 to select for the worker node 110. For instance, the worker node may have a specific configuration that biases the worker strategy 116 towards complex tasks or a particular type of task such as statistical analysis, graphical analysis, and the like. The worker strategy 116 determines how much and what types of work are consumed from the work collection 108. In one example, a worker strategy 116 can provide a filter for certain types of work regardless of capacity of the worker node (e.g., complex tasks). In another example, a worker strategy 116 may be to select the maximum amount of tasks based on the capacity of the worker node without regard for the type of work.

Each worker node 110 may have a unique identifier that identifies the worker node to the one or more supervisors. The unique identifier may further identify parameters of the worker node 110 that identify an affinity for a type of work, an attribute of the worker node 110 (e.g., memory size), or the like.

Backlog supervisor 120 may be a software component that monitors the performance of the worker node 110 relative to the work collection 108. The backlog supervisor 120 may determine that the rate of completion of the work collection 108 is not sufficient and generate additional worker nodes 110 to provide additional capacity for performing tasks. The backlog supervisor 120 may determine that a particular combination of tasks in the work collection 108 require additional worker nodes 110 based on the compute costs or affinity. For example, given a work collection 108 that has a large quantity of low-affinity and high compute cost tasks, more worker nodes 110 may be needed to provide a robust completion rate and tolerate any failures among worker nodes 110.

Lifetime supervisor 130 may be a software component that monitors the health and performance of each worker node 110. For instance, the lifetime supervisor may monitor the performance attributes such as available memory, CPU usage, worker node state, among other factors. The lifetime supervisor 130 may determine that the worker node 110 has failed, or is likely to fail and can generate an additional worker node to provide fault tolerance.

Results 118 may be a set of results generated by the worker node 110 in response to performing the one or more compute tasks associated with the task in the work collection 108. Examples of results may be computed values, vectors, files, or other digital output that can result from performance of a compute task.

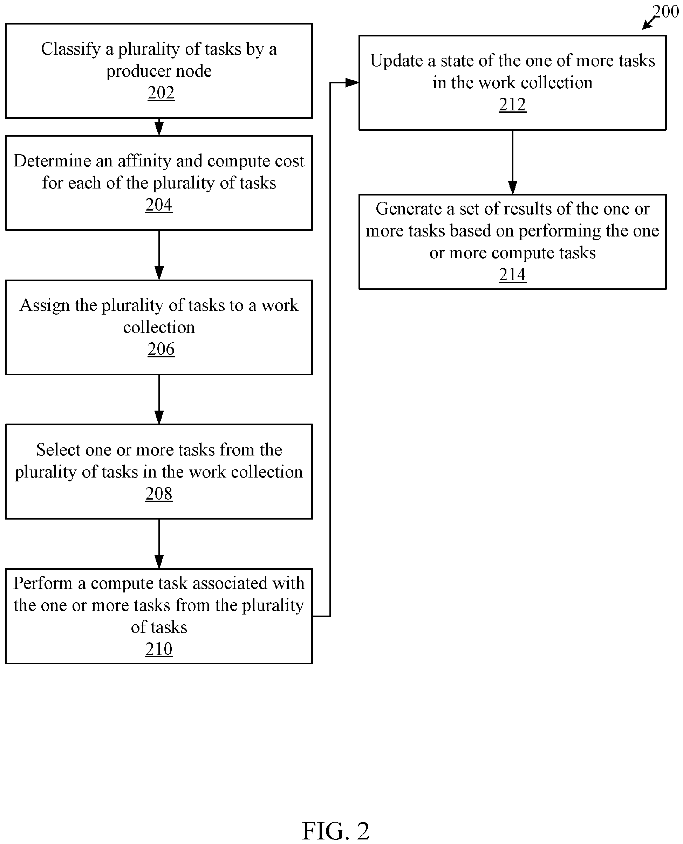

FIG. 2 depicts an example of a process 200 for affinity-based distributed workflow, according to certain embodiments of the present disclosure.

At block 202, a computer program executed by a producer node may classify a plurality of tasks. A producer node may classify each of a plurality of tasks based on analyzing each ask and the type, duration, and output of each task. The producer node may apply a machine learning classifier to the plurality of tasks, or apply another known method of classifying tasks.

At block 204, the computer program executed by a producer node may determine an affinity and compute cost for each of the plurality of tasks. The producer node may determine an affinity 104 between a first task of the plurality of tasks and a second task of the plurality of tasks. In one example, the affinity is a similarity score. In another example, the affinity may be a metric that indicates a degree of compute cost overlap between the first task and the second task. The compute cost may be determined based on determining a length of compute time to complete a particular task. In some cases, the complexity of the task, the quantity of data processing, or the number of compute steps required may be used to generate the compute cost.

At block 206, the computer program executed by a producer node may assign the plurality of tasks to a work collection. The producer node may assign the plurality of tasks into a work collection after classification. In one example, the producer may assign the plurality of tasks to a data structure to store the plurality of tasks. In some embodiments, the producer may assign subsets of task to different work collections. For instance, the producer may provide groups by classification and assign each group of tasks to a respective work collection. The work collection may store the task along with an associated affinity, compute cost of the task, a state, and other attributes of the task.

At block 208, a computer program executed by a worker node may select one or more tasks from the plurality of tasks in the work collection. The worker node may select one or more tasks from the work collection. The worker node may select work based on a strategy as described with regard to FIG. 1 for each worker. In some examples, the worker node may determine a gulp rate to ingest specific types of work, or to select specific tasks based on historical data relating to the tasks, time of day, overall status of the work collection, or a current memory state of the worker node.

At block 210, a computer program executed by a worker node may perform a compute task associated with the one or more tasks from the plurality of tasks. After selection of the task from the work collection, the worker node may perform compute tasks associated with the selected task. In some examples, multiple compute tasks may be associated with a single selected task from the work collection.

At block 212, a computer program executed by a worker node may update a state of the one or more tasks in the work collection. For instance, the worker node or a supervisor can update the state of each task selected by the worker node. The worker node can update the state upon selection and initiation of performing the task. The worker node can update the state upon completion of the task. In the event that the worker node fails, the supervisor can update the state of the task to failed and trigger selection of the task by another worker node.

At block 214, a computer program executed by a worker node may generate a set of results of the one or more tasks based on performing the one or more compute tasks. For instance, the worker node can generate a set of results as an output of performing the one or more compute tasks associated with the task in the work collection. Examples of results may be computed values, vectors, files, or other digital output that can result from performance of a compute task. The worker node can output the set of results to a database, a user interface, or provide the set of results to another computing system for additional processing, storage, or the like.

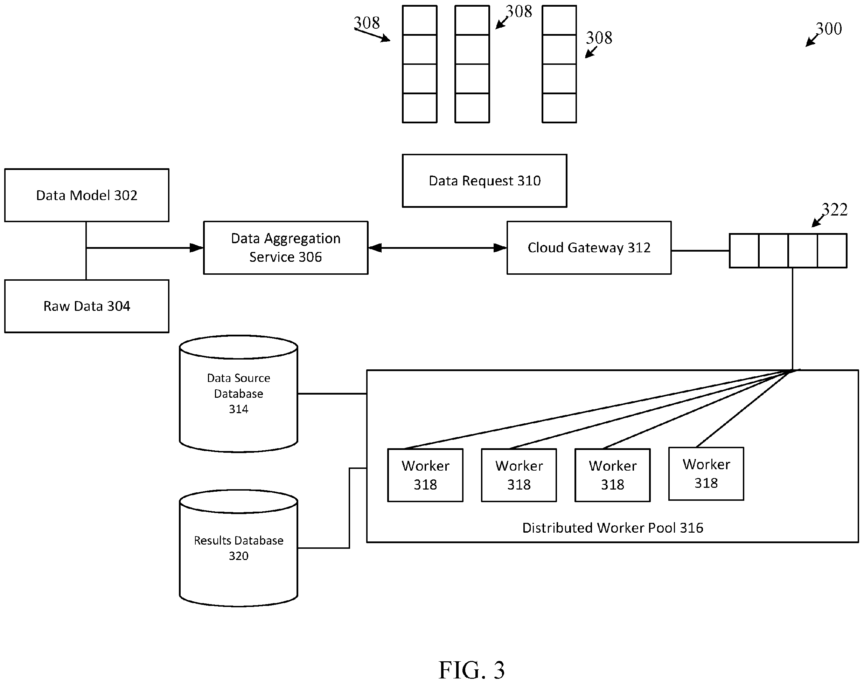

FIG. 3 depicts an example of a computing system for affinity-based distributed workflow according to certain embodiments of the present disclosure. The computing system 300 may include data aggregation service 306, cloud gateway 312, and distributed worker pool 316.

The data aggregation service 306 may receive inputs from a data model 302 and raw data 304. The data model 302 may be a domain-specific data model that is used for data analysis related to the domain of raw data 304. In one example, the raw data 304 could include various risk parameters or market data that describes various characteristics of the domain. The data aggregation service 306 may communicate the raw data 304 or data model 302 to the cloud gateway 312. The data aggregation service 306 may identify sets of related data from the raw data or related processes within the data model 302. For instance, the data model 302 may include analytical metrics such as statistical measures or similarity scores that include a number of common processing steps. The data aggregation service 306 may generate affinity groups 308 of the raw data 304 or of the parameters of the data model 302. The data aggregation service 306 may generate any number of affinity groups 308.

The cloud gateway 312 may perform analysis or processing on the raw data based on the data model 302. For example, the cloud gateway 312 may determine a plurality of tasks based on the raw data 304 or the data model 302. The cloud gateway 312 may receive a data request 310 that requests a specific processing task from the cloud gateway 312. The cloud gateway may generate a work queue 322 and assign tasks from the affinity groups 308. The cloud gateway 312 may provide the work queue 322 to a distributed worker pool 316.

The distributed worker pool 316 may include any number of workers 318. The distributed worker pool may process the work queue using the workers 318. Each of the workers 318 may be a worker node that includes a processor, a memory, and a unique identifier. In one example, the distributed work pool may generate a number of workers 318 based on the size of work queue 322. Each worker 318 may execute a strategy of performing work within the distributed worker pool 316. Each worker may determine a particular strategy to determine a priority for selecting tasks from the work queue 322. The distributed worker pool 316 may update the status of work queue 322 as individual tasks are selected, initiated, completed, or failed. The distributed worker pool 316 may also receive inputs from the data source database 314. The distributed worker pool 316 may output results to a results database 320.

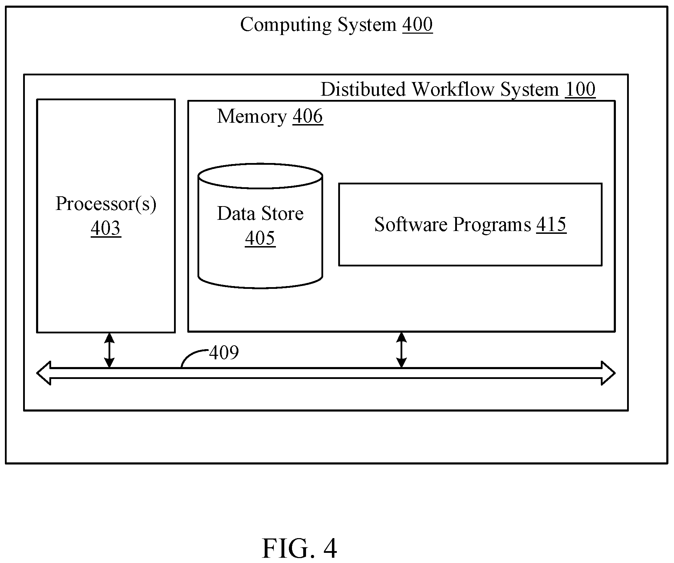

FIG. 4 depicts an example of computing system 400 according to certain embodiments of the present disclosure. The implementation of computing system 400 could be used for affinity-based distributed workflow as described with regards to FIGS. 1-3. The depicted example of the computing system 400 includes a processor 403 coupled to a memory 406. The processor 403 executes computer-executable program code stored in memory 406, such as software programs 415 and stores program-related information in data store 405. The processor 403 and the memory 406 may be coupled by a bus 409. In some examples, the bus 409 may also be coupled to one or more network interface devices (not shown).

Although several embodiments have been disclosed, it should be recognized that these embodiments are not exclusive to each other, and certain elements or features from one embodiment may be used with another.

Hereinafter, general embodiments of implementation of the systems and methods of the invention will be described.

The system of the invention or portions of the system of the invention may be in the form of a "processing machine," such as a general-purpose or specialized computing system, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or a software application.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement the invention may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA, PLD, PLA or PAL, or any other device or arrangement of devices that are capable of implementing the steps of the processes of the invention.

It is appreciated that in order to practice the method of the invention as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above may, in accordance with a further embodiment of the invention, be performed by a single component. Further, the processing performed by one distinct component as described above may be performed by two distinct components. In a similar manner, the memory storage performed by two distinct memory portions as described above may, in accordance with a further embodiment of the invention, be performed by a single memory portion. Further, the memory storage performed by one distinct memory portion as described above may be performed by two memory portions.

Further, various technologies may be used to provide communication between the various processors and/or memories, as well as to allow the processors and/or the memories of the invention to communicate with any other entity; i.e., so as to obtain further instructions or to access and use remote memory stores, for example. Such technologies used to provide such communication might include a network, the Internet, Intranet, Extranet, LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of the invention. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of the invention may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Also, the instructions and/or data used in the practice of the invention may utilize any compression or encryption technique or algorithm, as may be desired. An encryption module might be used to encrypt data. Further, files or other data may be decrypted using a suitable decryption module, for example.

As described above, the invention may illustratively be embodied in the form of a processing machine, including a computer or computer system, for example, that includes at least one memory. It is to be appreciated that the set of instructions, i.e., the software for example that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in the invention may take on any of a variety of physical forms or transmissions, for example. Illustratively, the medium may be in the form of paper, paper transparencies, a compact disk, a DVD, an integrated circuit, a hard disk, a floppy disk, an optical disk, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors of the invention.

Further, the memory or memories used in the processing machine that implements the invention may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the system and method of the invention, a variety of "user interfaces" may be utilized to allow a user to interface with the processing machine or machines that are used to implement the invention. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method of the invention, it is not necessary that a human user actually interact with a user interface used by the processing machine of the invention. Rather, it is also contemplated that the user interface of the invention might interact, i.e., convey and receive information, with another processing machine, rather than a human user. Accordingly, the other processing machine might be characterized as a user. Further, it is contemplated that a user interface utilized in the system and method of the invention may interact partially with another processing machine or processing machines, while also interacting partially with a human user.

It will be readily understood by those persons skilled in the art that the present invention is susceptible to broad utility and application. Many embodiments and adaptations of the present invention other than those herein described, as well as many variations, modifications and equivalent arrangements, will be apparent from or reasonably suggested by the present invention and foregoing description thereof, without departing from the substance or scope of the invention.

Accordingly, while the present invention has been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. Computer assisted method of distributing tasks, the method comprising
determining a classification, by a producer node (102), for a plurality of tasks, wherein the classification comprises classifying, for each task of the plurality of tasks, a compute cost and an affinity to a different task of the plurality of tasks;
assigning, by the producer node (102), the plurality of tasks to a work collection;
selecting, by a worker node (110), one or more tasks from the plurality of tasks in the work collection based on a selection strategy of the worker node, wherein the selection strategy is based on a target affinity and a target cost of the worker node;
performing, by the worker node, a compute task associated with the one or more tasks of the plurality of tasks; and
generating, by the worker node (110), a set of results based on performing the compute task.

2. Method of claim 1, wherein
the affinity is computed based on a similarity between a first task and a second task of the plurality of tasks;
or
performing the compute task comprises performing a set of computing operations that are associated with the one or more tasks.

3. Method of one of prior claims, wherein the selection strategy is unique to the worker node and comprises determining a gulp of tasks based on an available memory of the worker node, wherein the gulp of tasks includes a target type of tasks, a target quantity of tasks, or a target compute cost per gulp.

4. Method of one of prior claims, wherein assigning the plurality of tasks to a work collection comprises:
sorting, based on the affinity or the compute cost, the plurality of tasks;
and
assigning, based on the sorting, a first subset of the plurality of tasks to a first work collection, and a second subset of the plurality of tasks to a second work collection.

5. Method of one of prior claims, further comprising:
monitoring the worker node and the work collection;
determining, based on the monitoring, a number of additional worker nodes to activate;
and
activating the number of additional worker nodes.

6. Method of one of prior claims, further comprising
monitoring the worker node and the work collection;
determining, based on the monitoring, a failure state of the worker node and a failed status of the one or more tasks of the plurality of tasks;
and
selecting, by a second worker node, the one or more tasks of the plurality of tasks based on the failed status of the one or more tasks.

7. System for computer assisted distributed workflow management, the system comprising
a producer node (102), configured to
determine a classification for a plurality of tasks, wherein the classification comprises a compute cost and an affinity, for each task of the plurality of tasks, to a different task of the plurality of tasks;
assign the plurality of tasks to a work collection;
and
a worker node (110), configured to
select one or more tasks from the plurality of tasks in the work collection based on a selection strategy of the worker node, wherein the selection strategy is based on a target affinity and a target cost of the worker node;
perform a compute task associated with the one or more tasks of the plurality of tasks;
and
generate a set of results based on performing the compute task.

8. System of claim 7, wherein
the affinity is computable based on a similarity between a first task and a second task of the plurality of tasks;
or
the computable task comprises a function to perform a set of computing operations that are associated with the one or more tasks.

9. System of one of prior claims 7 or 8, wherein the selection strategy is unique to the worker node and comprises a function to determine a gulp of tasks based on an available memory of the worker node, wherein the gulp of tasks includes a target type of tasks, a target quantity of tasks, or a target compute cost per gulp.

10. System of one of prior claims 7 et seq., wherein assigning the plurality of tasks to a work collection comprises a function of
sorting, based on the affinity or the compute cost, the plurality of tasks;
and
assigning, based on the sorting, a first subset of the plurality of tasks to a first work collection, and a second subset of the plurality of tasks to a second work collection.

11. System of one of prior claims 7 et seq., further comprising a supervisor, configured to
monitor the worker node and the work collection;
determine, based on the monitoring, a number of additional worker nodes to activate;
and
activate the number of additional worker nodes.

12. System of one of prior claims 7 et seq., further comprising a supervisor configured to
monitor the worker node and the work collection;
determine, based on the monitoring, a failure state of the worker node and a failed status of the one or more tasks of the plurality of tasks; and
select, by a second worker node, the one or more tasks of the plurality of tasks based on the failed status of the one or more tasks.

13. Cloud computing environment for distributed workflow management, the cloud computing environment comprising
a producer node configured to
determine a classification for a plurality of tasks, wherein the classification comprises a compute cost and an affinity, for each task of the plurality of task, to a different task of the plurality of tasks;
and
assign the plurality of tasks to a work collection;
a worker node configured to
select one or more tasks from the plurality of tasks in the work collection based on a selection strategy of the worker node, wherein the selection strategy is based on a target affinity and a target cost of the worker node;
perform a compute task associated with the one or more tasks of the plurality of tasks; and
generate a set of results based on performing the compute task;
a backlog supervisor configured to
monitor the worker node and the work collection;
determine, based on the monitoring, a number of additional worker nodes to activate; and
activate the number of additional worker nodes;
a lifetime supervisor configured to
monitor the worker node and the work collection;
determine, based on the monitoring, a failure state of the worker node and a failed status of the one or more tasks of the plurality of tasks; and
select, by a second worker node, the one or more tasks of the plurality of tasks based on the failed status of the one or more tasks.

14. Cloud computing environment of claim 13, wherein
the affinity is computed based on a similarity between a first task and a second task of the plurality of tasks
or
performing the compute task comprises performing a set of computing operations that are associated with the one or more tasks.

15. Cloud computing environment of one of claims 13 and 14, wherein the selection strategy is unique to the worker node and comprises determining a gulp of tasks based on an available memory of the worker node, wherein the gulp of tasks includes a target type of tasks, a target quantity of tasks, or a target compute cost per gulp.

16. The cloud computing environment of one of claims 13 to 15, wherein assigning the plurality of tasks to a work collection comprises
sorting, based on the affinity or the compute costs, the plurality of tasks;
and
assigning, based on the sorting, a first subset of the plurality of tasks to a first work collection, and a second subset of the plurality of tasks to a second work collection.
